# EUROPÄISCHE PATENTSCHRIFT

(11) **EP 0 651 853 B1**
(45) Veröffentlichungstag und Bekanntmachung des Hinweises auf die Patenterteilung: **25.09.1996**
(21) Anmeldenummer: 93912989.6
(22) Anmeldetag: 16.06.1993
(51) Int. Cl.: F01K 23/06

(54) **VERFAHREN UND ANORDNUNG ZUM BETRIEB EINES KOMBIKRAFTWERKES**
METHOD AND DEVICE FOR THE OPERATION OF A COMBINED-PROCESS POWER STATION
PROCEDE ET DISPOSITIF POUR L'EXPLOITATION D'UNE CENTRALE COMBINEE

(30) Priorität: 24.07.1992 DE 4224958
(43) Veröffentlichungstag der Anmeldung: 10.05.1995
(73) Patentinhaber: VEAG VEREINIGTE ENERGIEWERKE AKTIENGESELLSCHAFT, D-12681 Berlin (DE)
(72) Erfinder: REICH, Werner, D-7513 Cottbus (DE); HARTIG, Lutz, D-7500 Cottbus (DE); BAUER, Franz, D-4320 Hattingen (DE)
(74) Vertreter: Zinken-Sommer, Rainer
(86) Internationale Anmeldenummer: EP9301523
(87) Internationale Veröffentlichungsnummer: WO9402712

(56) Entgegenhaltungen:
- EP-A- 0 276 431
- FR-A- 1 205 141
- US-A- 4 253 300
- PATENT ABSTRACTS OF JAPAN vol. 8, no. 148 (M-308)11. Juli 1984 & JP,A,59 046 305 (ISHIKAWAJIMA HARIMA JUKOGYO) 15. März 1984

## Beschreibung

Die Erfindung betrifft ein Verfahren und eine Anordnung zum Betrieb eines Kombikraftwerkes mit Verbrennung von festen Brennstoffen, insbesondere von Braunkohle.

Für Kombikraftwerke sind folgende Prozesse bekannt:
1. Kombiprozeß mit integrierter Kohlevollvergasung
2. Kombiprozeß mit Teilvergasung und nachgefeuerten Abluftkessel
3. Kombiprozeß mit Druckwirbelschichtfeuerung
4. Kombiprozeß mit kohlegefeuerten Lufterhitzer

Bei einem Kombiprozeß mit kohlegefeuerten Lufterhitzer sind zur Verbesserung der Prozeßführung und zur Erhöhung des Wirkungsgrades eine Vielzahl von Maßnahmen bekannt.

So ist es u. a. bekannt, die Wärmetauscher für die Erwärmung der Gasturbinen-Heißluft in von den Brennkammer-Rauchgasen beaufschlagten Kanälen anzuordnen (DE-OS 32 03 082). Die so erwärmte Luft wird mittels gas- oder ölbeaufschlagten im Luftkanal angeordneten Misch- und Brennraum erhitzt und der Gasturbine als Heißluft-Rauchgas-Gemisch zugeführt (DE-OS 36 13 300).

Insbesondere bei der Verbrennung von Braunkohle sind jedoch erhebliche Aufwendungen für Entstaubungsmaßnahmen (DE-OS 32 03 082) und für die Bereitstellung an weiteren Energieträgern (DE-OS 3613 300) erforderlich, um die angestrebten Prozeßverbesserungen und Wirkungsgraderhöhungen tatsächlich zu erreichen. So ist es bekannt, eine separate gasbetriebene Vorschalt-Brennkammer mit einer Lufterhitzerstufe anzuordnen, deren Eintrittsseite mit dem Kessel und deren Austrittsseite mit der Gasturbine verbunden ist (JP 59046305). Mit einer derart betriebenen Vorschalt-Brennkammer werden die gewünschten Temperaturen erreicht.

Für die Erzielung hoher Eintrittstemperaturen für die Gasturbine sind jedoch hochwertige und besonders aufbereitete Primärenergieträger, wie Gas, erforderlich. Bei Anwendung fester Brennstoffe ist eine Heißgasreinigung erforderlich, die jedoch bei den erforderlichen Temperaturen technisch ungelöst ist.

Der Erfindung liegt daher die Aufgabe zugrunde, den Kombiprozeß bei Nutzung fester Brennstoffe, insbesondere Rohbraunkohle, effektiv und technisch sicher zu betreiben.

Dies wird dadurch erreicht, daß erfindungsgemäß die erhitzte Heißluft in einer separaten festbrennstoffbetriebenen Vorschalt-Brennkammer mit flüssigen Ascheabzug indirekt hocherhitzt und die Rauchgase der Vorschalt-Brennkammer separat oder gemeinsam mit der Abluft der Gasturbine im Kombiprozeß oder in separaten Prozessen energetisch genutzt werden.

Zur Realisierung ist erfindungsgemäß eine separate festbrennstoffbetriebene Vorschalt-Brennkammer mit Flüssigasche-Abzug und einer Lufterhitzerstufe angeordnet, deren Eintrittsseite mit dem Kessel und deren Austrittsseite mit der Gasturbine verbunden ist und daß der Rauchgasaustritt der Vorschalt-Brennkammer separat oder gemeinsam mit dem Abluft-Austritt der Gasturbine mit dem Kessel und/oder mit einer Brennstoffaufbereitungsanlage und/oder mit einer Wärmenutzungsanlage verbunden sind.

Durch die Erfindung werden folgende Vorteile erreicht:
1. Nutzung fester Brennstoffe, dadurch Schonung hochwertiger Primärenergieträger
2. Eindeutige Trennung von Feuerungen mit festen und flüssigen Ascheabzug durch Gestaltung des Kessels und der Vorschalt-Brennkammer
3. Alternative zur Kohlevergasung, d. h. keine Heißgasreinigung
4. Anwendung moderner Feuerungstechnik (Druckfeuerung, Wirbelschichtfeuerung und deren Kombination)
5. Vermeidung von Korrosion und Erosion der Gasturbine durch Feststoffpartikel
6. Wirkungsgradverbesserung bei Verwendung fester Brennstoffe durch höhere Eintrittstemperaturen für die Gasturbine (Nutzung des Entwicklungspotentials der Gasturbine).
7. Wesentliche Reduzierung der CO₂-Emission
8. Senkung der NOₓ-Emission durch Verdünnen bei Einleitung der Gasturbinen-Abluft in den Kessel
9. Geschlossenes anlagentechnisches Konzept
10. Optimale Prozeßführung
11. Optimale Auslegung von Anlagenkomponenten
12. Möglichkeiten der Wärme-Kraft-Kopplung
13. Gutes Betriebs- und Lastverhalten
14. Nutzung der Abgase zur Brennstofftrocknung
15. Nutzung vorhandener Standorte und Infrastruktur sowie Nachrüstungsmöglichkeiten
16. Die Vorschaltbrennkammer ist ausschließlich auf die Lufterhitzung auszulegen.

Die Erfindung wird anhand von Ausführungsbeispielen näher erläutert. Die Zeichnungen zeigen:
- Fig. 1:: Das Grundschaltbild eines Kombiprozesses mit indirekt beheizter Gasturbine und kohlegefeuertem Dampf-/Heißluftkessel sowie atmosphärischer Vorschalt-Brennkammer
- Fig. 2:: Das Grundschaltbild eines Kombiprozesses mit indirekt beheizter Gasturbine und kohlegefeuertem Dampf-/Heißluftkessel sowie druckaufgeladener Vorschalt-Brennkammer
- Fig. 3:: Die Abzweigung des Brennstoffs für die Vorschalt-Brennkammer aus dem Brennstoffaufbereitungssystem des Dampf-/Heißluftkessels und Einleitung des Rauchgases der Vorschalt-Brennkammer in den Dampf-/Heißluftkessel oder die Gasturbinen-Abluft sowie die Verwendung der Gasturbinen-Abluft als Verbrennungsluft für Vorschalt-Brennkammer und Dampf-/Heißluftkessel einschließlich Kaltluftzumischung
- Fig. 4:: Die Einleitung des Rauchgases der Vorschalt-Brennkammer und der Abluft der Gasturbine in den Dampf-/ Heißluftkessel
- Fig. 5:: Die Einleitung des Rauchgases der Vorschalt-Brennkammer und der Abluft der Gasturbine in das Brennstoffaufbereitungssystem des Dampf-/Heißluftkessels
- Fig. 6:: Die Einleitung der Rauchgase der Vorschalt-Brennkammer in den Dampf-/Heißluftkessel mit geschlossenen Luftkreislauf für die Gasturbine
- Fig. 7:: Das Grundschaltbild eines Kombiprozesses mit druckgefeuertem Dampfkessel, druckaufgeladener Vorschalt-Brennkammer und nachgeschalteter Gasturbine.

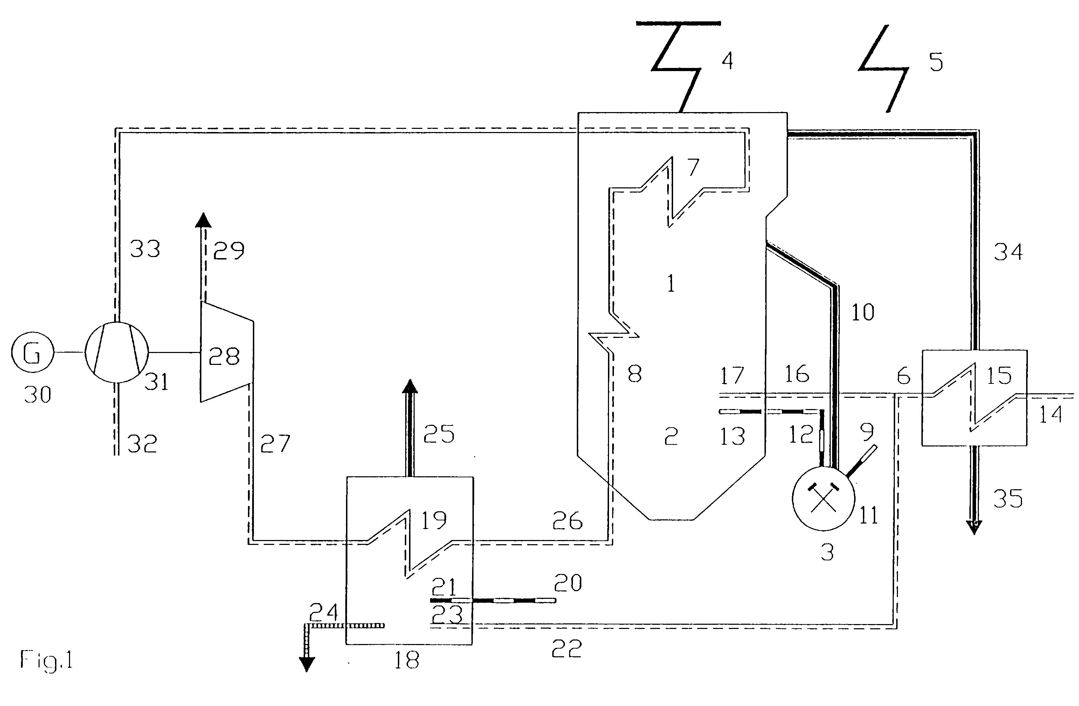

Der Dampf-/Heißluftkessel 1 weist die Brennkammer 2 mit dem Brennstoffaufbereitungssystem 3, den Frischdampfüberhitzer 4 und den Zwischenüberhitzer 5, das Verbrennungsluftsystem 6 sowie die Lufterhitzer 7; 8 zur Heißlufterzeugung auf (Fig. 1). Das Brennstoffaufbereitungssystem 3 besteht aus Rohkohlezuführung 9, Rauchgasrücksaugung 10, Mühle 11, Kohlenstaubleitung 12 und -brenner 13. Das Verbrennungsluftsystem 6 besteht aus dem nicht argestellten Frischlüfter, Kaltluftleitung 14, Luftvorwärmer 15, Warmluftleitung 16 und Luftzumischung 17. Der oberhalb der Brennkammer 2 angeordnete Lufterhitzer 7 (erste Stufe) ist als Rohrbündelheizfläche und der in der Brennkammer angeordnete Lufterhitzer 8 (zweite Stufe) als Wandheizfläche ausgebildet. Die Überhitzer 4; 5 sind mit der nicht dargestellten Dampfturbinenanlage verbunden.

Die Vorschaltbrennkammer 18 enthält den Lufterhitzer 19 (dritte Stufe) und ist mit Brennstoffzuführung 20, Kohlenstaubbrenner 21, Warmluftleitung 22, Luftzumischung 23, flüssigem Schlackeabzug 24 sowie Rauchgasabführung 25 versehen. Der Lufterhitzer 19 ist über die Heißluftleitung 26 mit dem Lufterhitzer 8 des Dampf-/Heißluftkessels 1 und über die Heißluftleitung 27 mit der Gasturbine 28 verbunden, die die Abluftleitung 29 aufweist. Die Gasturbine 28 ist mechanisch mit Generator 30 und Verdichter 31 gekoppelt, der die Kaltluftleitung 32 aufweist und über die Druckluftleitung 33 mit dem Lufterhitzer 7 des Dampf-/Heißluftkessels 1 verbunden ist.

Bei atmosphärischer Vorschalt-Brennkammer 18 (Fig. 1) ist die Warmluftleitung 22 in die Warmluftleitung 16 des Lufterwärmers 15 eingebunden.

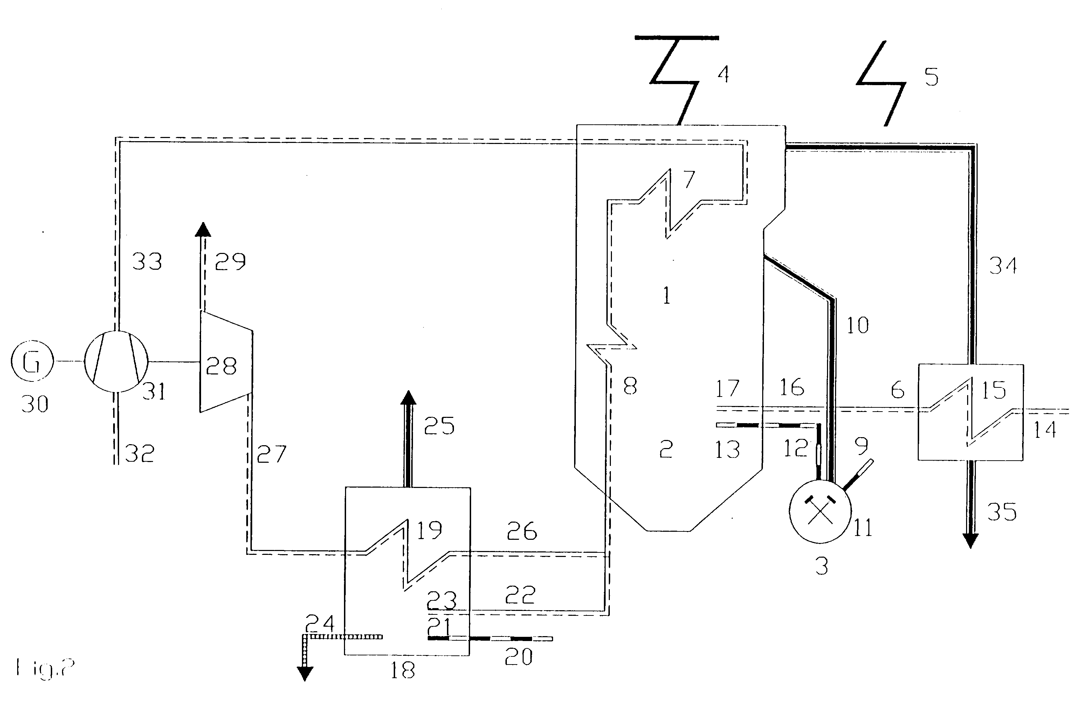

Bei druckaufgeladener Vorschalt-Brennkammer 18 (Fig. 2) ist die Warmluftleitung 22 in die Heißluftleitung 26 nach dem Dampf-/Heißluftkessel 1 eingebunden.

Die Wirkungsweise ist folgende:

Beim Gasturbinenprozeß wird die über Leitung 32 angesaugte Kaltluft im Verdichter 31 komprimiert und strömt über Leitung 33 in den Lufterhitzer 7 und danach in den Lufterhitzer 8 des Dampf-/Heißluftkessels 1. Anschließend gelangt die Heißluft über die Leitung 26 in die Vorschalt-Brennkammer 18 und wird im Lufterhitzer 19 indirekt auf die Eintrittstemperatur der Gasturbine 28 erhitzt. Über Leitung 27 tritt die Heißluft in die Gasturbine 28 ein, wird entspannt und über die Abluftleitung 29 einer weiteren Verwendung zugeführt.

Die Heißlufttemperaturen nach den Lufterhitzern 7; 8 im Dampf-/Heißluftkessel 1 werden vom Materialeinsatz bestimmt. Für den als Röhren-Luftvorwärmer ausgebildeten Luftvorwärmer 7 ist Stahl ausreichend, während für den in der Brennkammer 2 als Wandheizflächen angeordneten Lufterhitzer 8 wahlweise Stahl- oder Keramik-Werkstoffe eingesetzt werden können. Für den in der Vorschalt-Brennkammer 18 befindlichen Lufterhitzer 19 kommen nur keramische Werkstoffe in Frage. Die Ausbildung als Keramik-Wärmetauscher 8; 19 ist als Röhren-, Platten- oder als aus Modulen aufgebaute Kompakt-Heizfläche möglich.

Bei der Heißlufterzeugung kann auch der Luftvorwärmer 7 und/oder der Luftvorwärmer 8 entfallen. Beim Wegfall funkioniert der Kessel 1 als reiner konventioneller Dampferzeuger. In diesem Fall ist die Druckluftleitung 33 direkt an die Leitung 26 angeschlossen.

Der in der Vorschaltkammer 18 befindliche Lufterhitzer 19 kann auch aus mehreren Stufen aufgebaut werden (nicht dargestellt).

Beim Dampfturbinenprozeß wird im Dampf-/Heißluftkessel 1 durch Verbrennung des im Aufbereitungssystem 3 gemahlenen und getrockneten Brennstaubes in der Brennkammer 2 die Wärme entbunden, Dampf erzeugt und im Frischdampfüberhitzer 4 überhitzt. Der Dampf störmt zum nicht dargestellten Hochdruckteil der Turbine, nach Entspannung zurück zum Kessel 1; wird im Zwischenüberhitzer 5 erneut überhitzt und zur weiteren Entspannung wieder zur Turbine geleitet. Der Kessel 1 kann als Kohlenstaub- oder Wirbelschichtkessel (nicht dargestellt) gestaltet werden.

Im Verbrennungsluftsystem 6 wird die Luft für den Kessel 1 und für die atmosphärische Vorschalt-Brennkammer 18 (Fig. 1) vom nicht dargestellten Frischlüfter angesaugt, über die Kaltluftleitung 14 durch den Luftvorwärmer 15, die Warmluftleitungen 16; 22, die Luftzumischungen 17; 23 zu den Brennern 13; 21 gefördert. Der Luftvorwärmer 15 wird über die Rauchgasleitungen 34 mit Rauchgas des Kessels 1 beaufschlagt. Das Abgas des Luftvorwärmers 15 gelangt über Verbindungsleitungen 35 zur nicht dargestellten Rauchgasreinigungsanlage.

Für die druckaufgeladene Vorschalt-Brennkammer 18 (Fig. 2) wird die Verbrennungsluft aus der Heißluftleitung 26 abgezweigt und über die Leitung 22 und Luftzumischung 23 den Brennern 21 zugeführt. Die Abzweigung kann jedoch auch direkt aus der Druckluftleitung 33 oder nach dem Lufterhiterhitzer 7 erfolgen (nicht dargestellt).

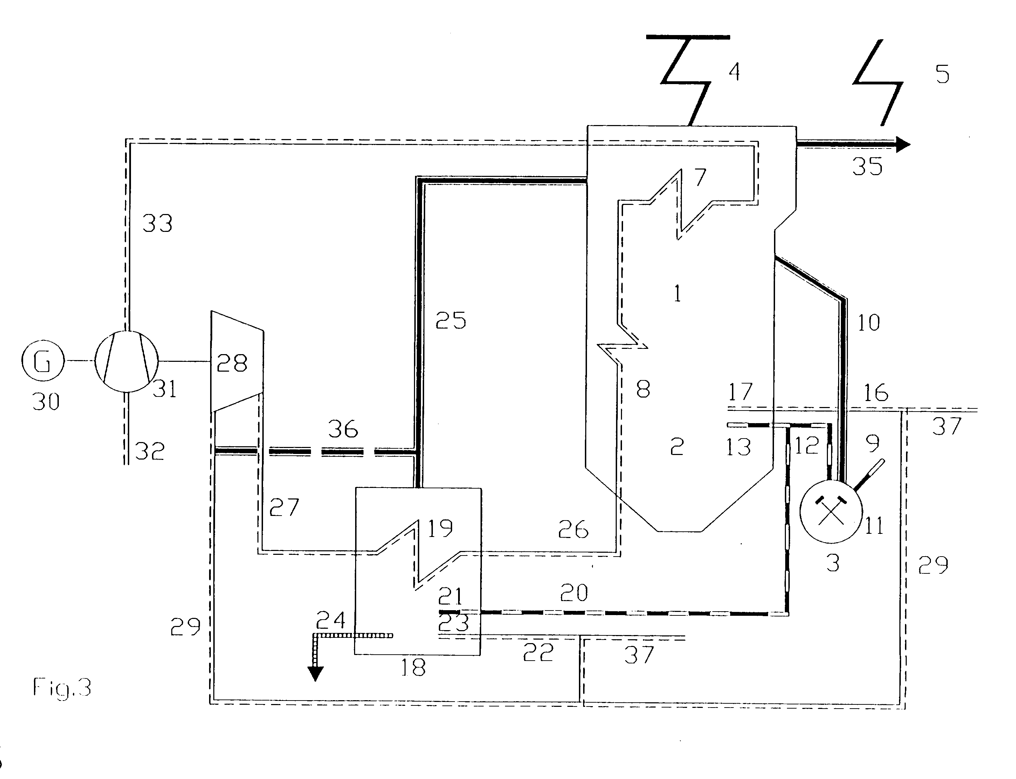

Der Brennstoff für die Vorschalt-Brennkammer 18 (Fig. 3) wird aus dem konventionellen Brnnstoffaufbereitungssystem 3 als Teilstrom abgezweigt und aus der Kohlenstaubleitung 12 über die Brennstoffleitung/-zuführung 20 zum Brenner 21 gefördert.

Die Bereitstellung des Brennstoffs ist jedoch auch extern aus dem Aufbereitungssystem eines anderen in Betrieb befindlichen Kessels, aus einer separaten Dampfwirbelschichttrocknungsanlage oder Kohletrocknung des Rauchgassystems oder aus Fremdaufkommen möglich (nicht dargestellt).

Das Rauchgas der Vorschalt-Brennkammer 18 (Fig. 3) wird über die Rauchgasabführungsleitung 25 in den Kessel 1 geleitet oder über Leitung 36 im Voll- oder Teilstrom der Gasturbinen-Abluft in Leitung 29 zugemischt.

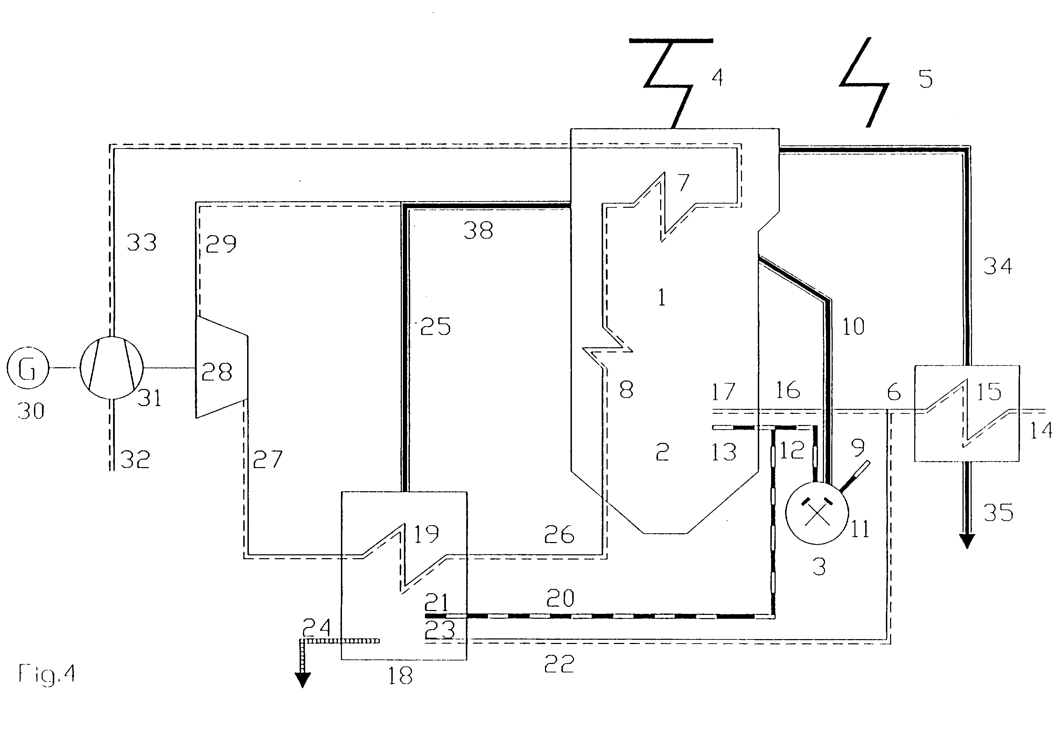

Als Verbrennungsluft für den Kessel 1 und für die Vorschalt-Brennkammer 18 (Fig. 3) wird die Gasturbinen-Abluft verwendet und über die Abluftleitung 29 den Luftleitungen 16; 22 zugeleitet, wobei an den Einbindestellen zwecks Temperatureinstellung eine Kaltluftzumischung 37 vorgesehen ist. Für diese Schaltung entfällt der konventionelle Luftvorwärmer 15 und das Abgas des Kessels 1 wird über Leitung 35 zur nicht dargestellten Rauchgasreinigungsanlage geleitet. Das Rauchgas der Vorschalt-Brennkammer 18 und die Abluft der Gasturbine 28 (Fig. 4) werden über die Rauchgasabführung 25 und die Abluftleitung 29 in den Kessel 1 geführt. Die Zuführung kann über eine gemeinsame Leitung 38 oder über getrennte Leitungssysteme (nicht dargestellt) erfolgen. Der Kessel 1 funktioniert in diesem Fall als kombinierter Dampf-/Heißluft-/Abhitzekessel.

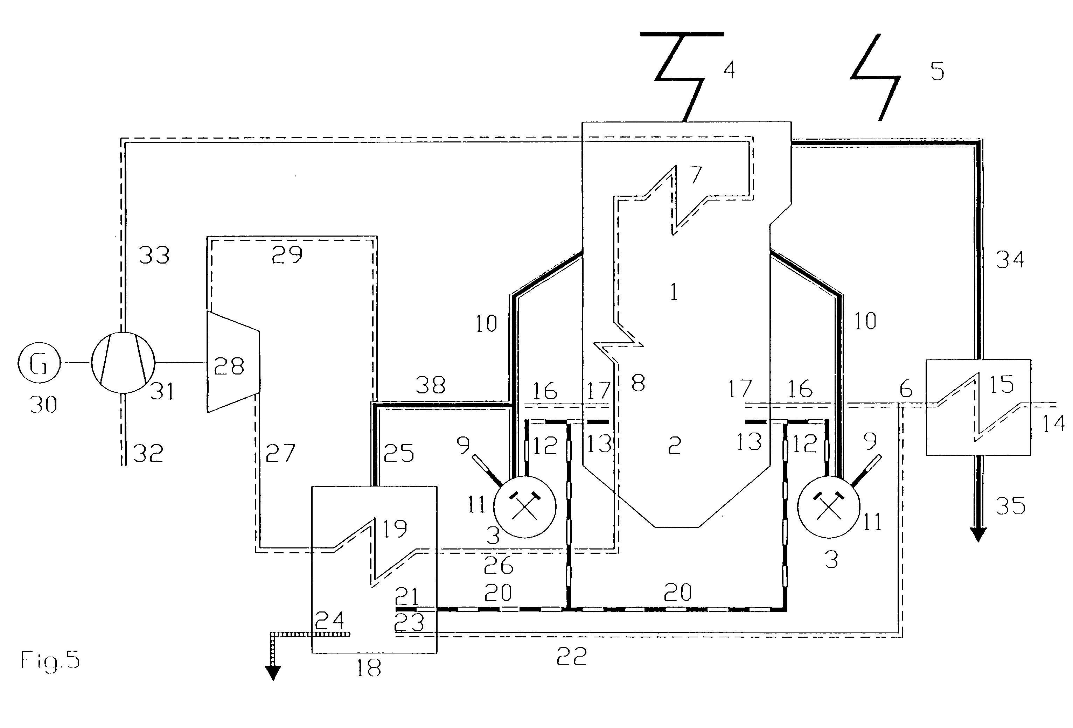

Das Rauchgas der Vorschalt-Brennkammer 18 und die Abluft der Gasturbine 28 (Fig. 5) werden für die Mahltrocknung der grubenfeuchten Rohkohle verwendet und über die Rauchgasabführung 25 bzw. Abluftleitung 29 sowie über die gemeinsame Leitung 38 in die Rauchgasrücksaugung 10 eingeleitet. Die Mischung mit rückgesaugten Rauchgasen des Kessels 1 kann erfolgen. Die Zuführung kann so gestaltet werden, daß neben dem Mischbetrieb die alleinige Verwendung von Rauchgasen des Kessels 1 oder ein Gemisch aus Rauchgas und Vorschalt-Brennkammer/Gasturbinen-Abluft möglich ist.

Die Nutzung des Rauchgases der Vorschalt-Brennkammer 18 und der Abluft der Gasturbine 28 kann für die beschriebenen Anwendungsmöglichkeiten im Voll- oder Teilstrom erfolgen.

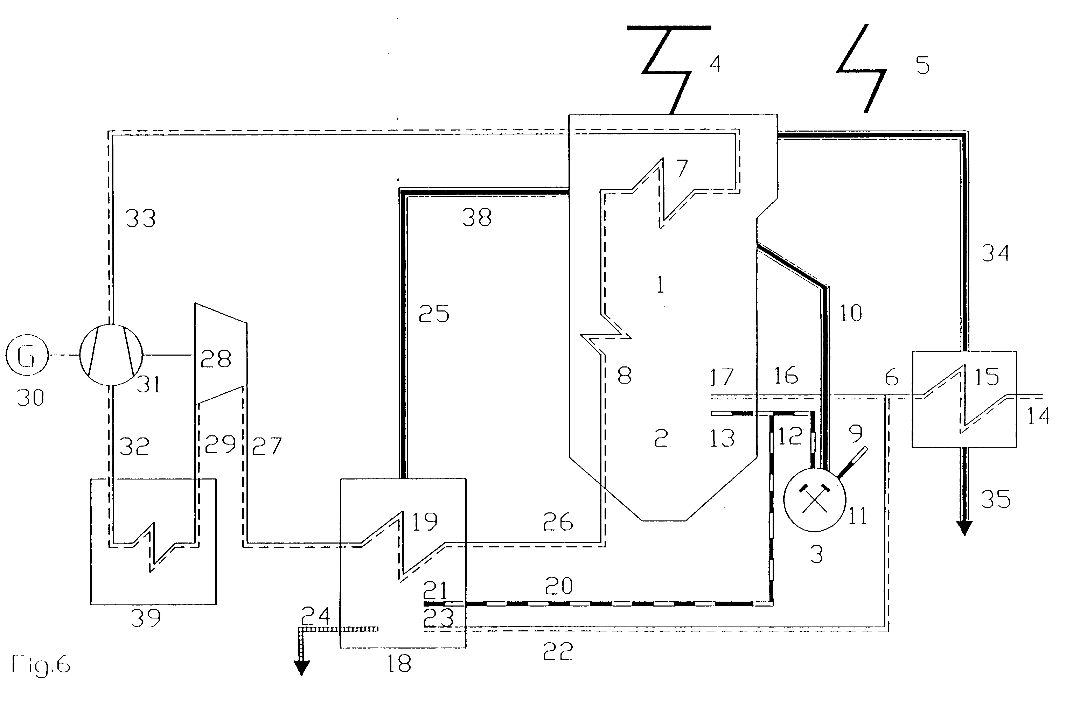

Ein geschlossener Luftkreislauf kann erreicht werden (Fig. 6), indem die Abluft der Gasturbine 28 über die Abluftleitung 29, dem Abhitzekessel 39 und die Ansaugleitung 32 wieder zum Verdichter 31 geleitet wird. Im Abhsitzekessel 39 wird die in der Abluft der Gasturbine 28 enthaltene Wärme zur Vorwärmung von Speisewasser und/oder Verbrennungsluft und/oder zur Überhitzung von Dampf für den Kessel 1 oder für einen separaten Prozeß genutzt.

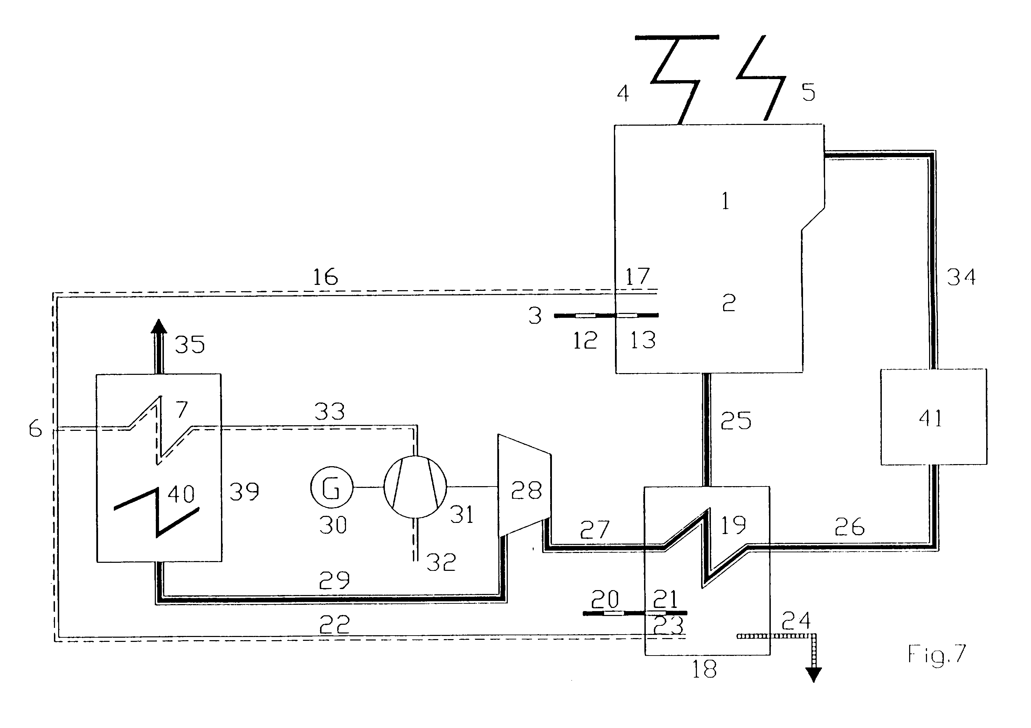

In weiterer Ausgestaltung der Erfindung wird eine druckaufgeladene Vorschalt-Brennkammer in einen Kombiprozeß mit druckgefeuertem Dampfkessel und nachgeschalteter Gasturbine integriert (Fig. 7).

Der Dampfkessel 1 weist die Druckfeuerung 2 mit dem Brennstoffsystem 3, den Frischdampfüberhitzer 4, den Zwischenüberhitzer 5 und das Verbrennungsluftsystem 6 auf. Das Brennstoffsystem 3 besteht aus Brennstoffdosierung 12 und Brenner oder Wirbelschicht 13. Das Verbrennungsluftsystem 6 besteht aus dem Verdichter 31 mit Kaltluftleitung 32, Warmluftleitung 33, Lufterhitzerstufe 7, Heißluftleitung 16 und Luftzumischung 17. Der Kessel 1 ist über Rauchgasleitung 34 mit einer Heißgasreinigung 41 verbunden und diese über Rauchgasleitung 26 mit der Vorschalt-Brennkammer 18. In dieser ist der Rauchgaserhitzer 19 enthalten. Weiterhin sind Brennstoffdosierung 20, Brenner oder Wirbelschicht 21, Heißluftleitung 16, Luftzumischung 23, flüssiger Schlackeabzug 24 und die mit dem Kessel 1 verbundenen Rauchgasabführungsleitung 25 angeordnet. Rauchgaserhitzer 19 und Eintritt der Gasturbine 28 sind miteinander über die Rauchgasleitung 27 gekoppelt und der Austritt der Gasturbine 28 mit dem Wärmetauscher bzw. Abhitzekessel 39 über Rauchgasleitung 29.

Der Abhitzekessel 39 enthält neben der Lufterhitzerstufe 7 den Wärmetauscher 40 zur Speisewasservorwärmung und/oder Dampf- überleitung sowie die Rauchgasabführung 35.

Die Wirkungsweise ist folgende:

Im Dampfkessel 1 wird in der Druckfeuerung 2 durch Verbrennung des festen Brennstoffes die Wärme entbunden und unter Druck stehendes Rauchgas erzeugt. Die entstehende Wärme wird zur Dampferzeugung und -überhitzung in den Überhitzern 4, 5 genutzt und der Dampf in der nicht dargestellten Turbinenanlage entspannt. Das erzeugte Rauchgas gelangt über Leitung 34 in die Heißgasreinigung 41, anschließend über Leitung 26 in den Rauchgaserhitzer 19 der Vorschalt-Brennkammer 18 und wird indirekt auf die Eintrittstemperatur der Gasturine 28 erhitzt. Über Leitung 27 tritt das gereinigt hocherhitzte Rauchgas in die Gasturbine 28 ein, wird entspannt und über die Leitung 29 dem Abhitzekessel zugeführt. Nach Abgabe der im entspannten Rauchgas enthaltenen Wärme im Wärmetauscher 40 und Lufterhitzer 7 wird das abgekühlte Rauchgas über Leitung 35 in den nicht dargestellten Schornstein geleitet.

Die Verbrennungsluft für den Kessel 1 und die Vorschalt-Brennkammer 18 wird vom Verdichter 31 der Gasturbine 28 über die Kaltluftleitung 32 angesaugt, komprimiert und zum Lufterhitzer 7 des Abhitzekessels 39 geleitet. Die erhitzte Verbrennungsluft strömt danach über Leitung 16 und Luftzumischung 17 in die Druckfeuerung 2 des Kessels 1. Die Verbrennungsluft für die Vorschalt-Brennkammer 18 wird als Teilstrom aus Leitung 16 abgezweigt und über Leitung 22 und Luftzumischung 23 zugeführt. Der Brennstoff für die Vorschalt-Brennkammer 18 kann aus dem Brennstoffsystem 3 des Kessels 1 als Teilstrom abgezweigt (nicht dargestellt) und über die Brennstoffdosierung 20 zum Brenner oder zur Wirbelschicht 21 gefördert werden.

Das Rauchgas der druckaufgeladenen Vorschalt-Brennkammer 18 wird über die Rauchgasabführungsleitung 25 zur Druckfeuerung 2 des Kessels 1 geleitet.

Wird die Vorschalt-Brennkammer 18 als atmosphärische Feuerung ausgeführt, können die Rauchgase einem Abhitzekessel (nicht dargestellt) und/oder einem atmosphärischen brennstaubgefeuerten Kessel (analog Fig. 4) und/oder der Brennstoffaufbereitungsanlage dieses Kessels (analog Fig. 5) oder einer nicht dargestellten separaten Anlage zugeführt werden.

Wird anstelle des Abhitzekessels 39 (Fig. 7) ein atmosphärischer brennstaubgefeuerter Kessel 1 (Fig. 4) eingesetzt, sind die Verbindungen des Rauchgases der Vorschalt-Brennkammer 18 mit dem entspannten Rauchgas der Gasturbine 28 analog Abluft der Gasturbine 28 (Fig. 4 und 5) anwendbar.

Bei Einleitung des Rauchgases der Vorschalt-Brennkammer 18 und des entspannten Rauchgases der Gasturbine 28 in den Kessel 39 (Fig. 7) bzw. 1 (Fig. 4) oder in die Rauchgasrücksaugung 10 (Fig. 5) dieses Kessels erfolgt die Zumischung aus den Leitungen 25; 29 über die gemeinsame Leitung 38 oder über getrennte Leitungssysteme.

### Aufstellung der verwendeten Bezugszeichen

- 1: Dampf-/Heißluftkessel
- 2: Brennkammer
- 3: Brennstoffaufbereitungssystem
- 4: Frischdampfüberhitzer
- 5: Zwischenüberhitzer
- 6: Verbrennungsluftsystem
- 7: Lufterhitzer
- 8: Lufterhitzer
- 9: Rohkohlezuführung
- 10: Rauchgasrücksaugung
- 11: Mühle
- 12: Kohlenstaubleitung
- 13: Kohlenstaubbrenner
- 14: Kaltluftleitung
- 15: Luftvorwärmer
- 16: Warmluftleitung
- 17: Luftzumischung
- 18: Vorschaltbrennkammer
- 19: Lufterhitzer
- 20: Brennstoffzuführung
- 21: Kohlenstaubbrenner
- 22: Warmluftleitung
- 23: Luftzumischung
- 24: Schlackeabzug
- 25: Rauchgasabführung
- 26: Heißluftleitung
- 27: Heißluftleitung
- 28: Gasturbine
- 29: Abluftleitung
- 30: Generator
- 31: Verdichter
- 32: Kaltluftleitung
- 33: Druclkuftleitung
- 34: Rauchgasleitung
- 35: Verbindungsleitung
- 36: Leitung
- 37: Kaltluftzumischung
- 38: Leitung
- 39: Alhitzekessel
- 40: Wärmetauscher
- 41: Heißgasreinigung

## Patentansprüche

1. Verfahren zum Betrieb eines Kombikraftwerkes mit Verbrennung fester Brennstoffe, insbesondere von Braunkohle, wobei die verdichtete Heißluft in einem von den Rauchgasen eines Kessels (1) beaufschlagten Wärmetauscher (7;8) erhitzt, durch eine separate Vorschalt-Brennkammer (18) indirekt hocherhitzt und einer Gasturbine (28) zugeführt wird,
**gekennzeichnet dadurch,**
daß die erhitzte Heißluft in einer festbrennstoffbetriebenen Vorschalt-Brennkammer (18) mit flüssigem Ascheabzug indirekt hocherhitzt und die Rauchgase der Vorschalt-Brennkammer (18) separat oder gemeinsam mit der Abluft der Gasturbine (28) im Kombiprozeß oder in separaten Prozessen energetisch genutzt werden.

2. Verfahren nach Anspruch 1, gekennzeichnet dadurch, daß die Verbrennungsluft für die Brenner (21) des Kessels und der atmosphärisch betriebenen Vorschalt-Brennkammer (18) durch einen gemeinsamen durch die Abgase des Kessels (1) beaufschlagten Luftvorwärmer (15) erwärmt wird.

3. Verfahren nach Anspruch 1, gekennzeichnet dadurch, daß die Verbrennungsluft für die Brenner (21) der druckaufgeladenen Vorschalt-Brennkammer (18) aus der erhitzten Heißluft abgezweigt wird.

4. Verfahren nach Anspruch 1, gekennzeichnet dadurch, daß der Brennstoff für die Vorschalt-Brennkammer (18) aus dem konventionellen Brennstoffaufbereitungssystem (3) des Kessels (1) als Teilstrom abgezweigt wird.

5. Verfahren nach Anspruch 1, gekennzeichnet dadurch, daß der Brennstoff für die Vorschalt-Brennkammer (18) in einer separaten Brennstoffaufbereitungsanlage erzeugt wird.

6. Verfahren nach Anspruch 1, gekennzeichnet dadurch, daß der Brennstoff aus einem in Betrieb befindlichen Kessel (1) des Kraftwerkes abgezweigt wird.

7. Verfahren nach Anspruch 1, gekennzeichnet dadurch, daß die Rauchgase der Vorschalt-Brennkammer (18) in den Kessel (1) eingeleitet werden.

8. Verfahren nach Anspruch 1, gekennzeichnet dadurch, daß die Rauchgase der Vorschalt-Brennkammer (18) für die Brennstoff-Aufbereitungsanlage (3) des Kessels (1) genutzt werden.

9. Verfahren nach Anspruch 1, gekennzeichnet dadurch, daß die Rauchgase der Abluft der Gasturbine (28) zugemischt werden.

10. Verfahren nach Anspruch 1, gekennzeichnet dadurch, daß die Abluft der Gasturbine (28) als Verbrennungsluft für den Kessel (1) und/oder die Vorschalt-Brennkammer (18) genutzt wird.

11. Verfahren nach Anspruch 1, gekennzeichnet dadurch, daß die Abluft der Gasturbine (28) in den Kessel (1) eingeleitet wird.

12. Verfahren nach Anspruch 1, gekennzeichnet dadurch, daß die Abluft der Gasturbine (28) für die Brennstoffaufbereitungsanlage des Kessels (1) genutzt wird.

13. Verfahren nach Anspruch 1 sowie 7 bis 12, gekennzeichnet dadurch, daß ein Rauchgas-Abluft-Gemisch erzeugt wird.

14. Verfahren nach Anspruch 1, gekennzeichnet dadurch, daß das Rauchgas der Vorschalt-Brennkammer (18) und/oder die Abluft der Gasturbine (28) für eine separate Brennstoffaufbereitungsanlage genutzt wird.

15. Verfahren nach Anspruch 1, gekennzeichnet dadurch, daß das Rauchgas der Vorschalt-Brennnkammer (18) und/oder die Abluft der Gasturbine (28) für eine separate Abhitzeverwertung genutzt wird.

16. Verfahren nach Anspruch 1 sowie 7 bis 15, gekennzeichnet dadurch, daß dem Rauchgas und/oder der Abluft der Gasturbine (28) Kaltluft zugemischt werden.

17. Verfahren zum Betrieb eines Kombikraftwerkes mit einem druckgefeuerten Kessel (1) und Verbrennung fester Brennstoffe, insbesondere Braunkohle, wobei das Rauchgas des Kessels (1) gereinigt, durch eine separate Vorschalt-Brennkammer (18) hocherhitzt und einer Gasturbine (28) zugeführt wird, gekennzeichnet dadurch, daß das gereinigte Rauchgas des Kessels (1) in einer separaten festbrennstoffbetriebenen Vorschalt-Brennkammer (18) mit flüssigem Ascheabzug indirekt hocherhitzt und die Rauchgase der Vorschalt-Brennkammer (18) separat oder gemeinsam mit dem Abgas der Gasturbine (28) im Kombiprozeß oder in einem separaten Prozeß energetisch genutzt werden.

18. Verfahren nach Anspruch 17, gekennzeichnet dadurch, daß die Rauchgase der Vorschalt-Brennkammer (18) einem Abhitzekessel und/oder dem Kessel (1) und/oder der Brennstoffaufbereitungsanlage des Kessels (1) und/oder einer separaten Anlage zugeführt werden.

19. Verfahren nach Anspruch 17, gekennzeichnet dadurch, daß die Verbrennungsluft für die Vorschalt-Brennkammer (18) als Teilstrom von der Verbrennungsluft für den Kessel (1) abgezweigt wird.

20. Verfahren nach Anspruch 17, gekennzeichnet dadurch, daß der Brennstoff für die Vorschalt-Brennkammer (18) aus der Brennstoffversorgung (3) des Kessels (1) abgezweigt wird.

21. Verfahren nach Anspruch 17, gekennzeichnet dadurch, daß das Rauchgas der Vorschalt-Brennkammer (18) in den Kessel zurückgeführt wird.

22. Anordnung zum Betrieb eines Kombikraftwerkes mit Verbrennung fester Brennstoffe, insbesondere von Braunkohle, wobei zwischen den mit einem Wärmetauscher (7; 8) versehenen Kessel (1) und der Gasturbine (28) eine separate Vorschalt-Brennkammer (18) mit einer Lufterhitzerstufe (19) angeordnet ist, deren Eintrittsseite (26) mit dem Kessel (1) und deren Austrittsseite (27) mit der Gasturbine (28) verbunden ist,
**gekennzeichnet dadurch**,
daß eine festbrennstoffbetriebene Vorschalt-Brennkammer (18) mit Flüssigasche-Abzug angeordnet ist und daß der Rauchgasaustritt (25) der Vorschalt-Brennkammer (18) separat oder gemeinsam mit dem Abluft-Austritt (29) der Gasturbine (28) mit dem Kessel (1) und/oder mit einer Brennstoffaufbereitungsanlage (3) und/oder mit einer Wärmenutzungsanlage verbunden ist.

23. Anordnung nach Anspruch 22, gekennzeichnet dadurch, daß der Kessel (1) als ein kombinierter Dampf-, Heißlufterzeuger und Abhitze-Kessel ausgebildet ist.

24. Anordnung nach Anspruch 22, gekennzeichnet dadurch, daß die Verbrennungsluftleitung (22) für die atmosphärisch betriebenen Brenner (21) der Vorschalt-Brennkammer (18) in die Verbrennungsluftleitung (6) des Kessels (1) eingebunden ist.

25. Anordnung nach Anspruch 22, gekennzeichnet dadurch, daß die Verbrennungsluftleitung (22) für die druckaufgeladene Vorschalt-Brennkammer (18) in die Heißluftleitung (26) eingebunden ist.

26. Anordnung nach Anspruch 22, gekennzeichnet dadurch, daß die Brennstoffleitung (20) der Vorschalt-Brennkammer (18) in die Brennstoffaufbereitungsanlage (3) des Kessels (1) eingebunden ist.

## Claims

1. A method for operating a combined power and heating station with combustion of solid fuel, especially lignite, in which the compressed hot air is heated in a heat exchanger (7; 8) that is exposed to the flue gases from a boiler (1), indirectly highly heated by a separate upstream combustion chamber and fed to a gas turbine (28),
**characterized in that**
the heated hot air is indirectly highly heated in an upstream solid fuel combustion chamber (18) with liquid ash removal and the flue gases from said upstream combustion chamber (18) are used separately or together with the exhaust air from the gas turbine (28) in the combined process or in separate processes for energetic purposes.

2. A process as claimed in Claim 1, characterized in that the combustion air for the burners (21) of the boiler and the upstream combustion chamber (18) operating under atmospheric conditions is heated by a common air preheater (15) exposed to the flue gases from the boiler (1).

3. A process as claimed in Claim 1, characterized in that the combustion air for the burners (21) of the pressurized upstream combustion chamber (18) is tapped from the heated hot air.

4. A process as claimed in Claim 1, characterized in that the fuel for the upstream combustion chamber (18) is tapped as a side stream from the conventional fuel preparation system (3) of the boiler (1).

5. A process as claimed in Claim 1, characterized in that the fuel for the upstream combustion chamber (18) is produced in a separate fuel preparation plant.

6. A process as claimed in Claim 1, characterized in that the fuel is tapped from an operational boiler (1) of the power station.

7. A process as claimed in Claim 1, characterized in that the flue gases from the upstream combustion chamber (18) are discharged into the boiler (1).

8. A process as claimed in Claim 1, characterized in that the flue gases from the upstream combustion chamber (18) are used for the fuel preparation plant (3) of the boiler (1).

9. A process as claimed in Claim 1, characterized in that the flue gases are admixed to the exhaust air from the gas turbine (28).

10. A process as claimed in Claim 1, characterized in that the exhaust air from the gas turbine (28) is used as combustion air for the boiler (1) and/or the upstream combustion chamber (18).

11. A process as claimed in Claim 1, characterized in that the exhaust air from the gas turbine (28) is discharged into the boiler (1).

12. A process as claimed in Claim 1, characterized in that the exhaust air from the gas turbine (28) is used for the fuel preparation plant of the boiler (1).

13. A process as claimed in Claims 1 and 7 to 12, characterized in that a mixture of flue gas and exhaust air is produced.

14. A process as claimed in Claim 1, characterized in that the flue gas from the upstream combustion chamber (18) and/or the exhaust air from the gas turbine (28) is used for a separate fuel preparation plant.

15. A process as claimed in Claim 1, characterized in that the flue gas from the upstream combustion chamber (18) and/or the exhaust air from the gas turbine (28) are used for a separate waste heat recovery system.

16. A process as claimed in Claims 1 and 7 to 15, characterized in that cold air is admixed to the flue gas and/or to the exhaust air from the gas turbine (28).

17. A process for the operation of a combined power and heating station with a pressure-fired boiler (1) and combustion of solid fuels, particularly lignite, in which the flue gas from the boiler (1) is cleaned, highly heated by a separate upstream combustion chamber (18) and fed to a gas turbine (28), characterized in that the cleaned gas from said boiler (1) is indirectly highly heated in a separate solid-fuel fired upstream combustion chamber with liquid ash removal and the flue gases from said upstream combustion chamber (18) are used separately or together with the exhaust gas from the gas turbine (28) in the combined process or in a separate process for energetic purposes.

18. A process as claimed in Claim 17, characterized in that the flue gases from the upstream combustion chamber (18) are fed to a waste heat boiler and/or the boiler (1) and/or the fuel preparation plant of the boiler (1) and/or a separate plant.

19. A process as claimed in Claim 17, characterized in that the combustion air for the upstream combustion chamber (18) is tapped as a side stream from the combustion air for the boiler (1).

20. A process as claimed in Claim 17, characterized in that the fuel for the upstream combustion chamber (18) is tapped from the fuel supply (3) for the boiler (1).

21. A process as claimed in Claim 17, characterized in that the flue gas from the upstream combustion chamber (18) is returned to the boiler (1).

22. An arrangement for the operation of a combined power and heating station with combustion of solid fuel, in particular lignite, in which a separate upstream combustion chamber (18) with an air heater stage (19), the inlet side (26) of which is connected to the boiler (1) and the outlet side (27) of which is connected to the gas turbine (28), is arranged between said boiler (1), which is provided with a heat exchanger (7; 8), and said gas turbine (28),
characterized in that
a solid-fuel fired upstream combustion chamber (18) with liquid ash removal is fitted and that the flue gas outlet (25) of said upstream combustion chamber (18) is connected separately or together with the exhaust air outlet (29) of said gas turbine (28) to said boiler (1) and/or to a fuel preparation plant (3) and/or to a waste heat recovery plant.

23. An arrangement as claimed in Claim 22, characterized in that the boiler (1) is constructed as a combined steam and hot air generator and waste heat boiler.

24. An arrangement as claimed in Claim 22, characterized in that the combustion air line (22) for the burners (21) operated under atmospheric conditions for the upstream combustion chamber (18) is integrated into the combustion air line (6) for the boiler (1).

25. An arrangement as claimed in Claim 22, characterized in that the combustion air line (22) for the pressurized upstream combustion chamber (18) is integrated into the hot air line (26).

26. An arrangement as claimed in Claim 22, characterized in that the fuel line (20) of the upstream combustion chamber (18) is integrated into the fuel preparation plant (3) for the boiler (1).

## Revendications

1. Procédé pour l'exploitation d'une centrale combinée à combustion de combustibles solides, surtout de lignite, l'air chaud comprimé étant chauffé dans un échangeur de chaleur (7; 8) alimenté par les gaz de fumée d'une chaudière (1), et porté à haute température indirectement par une chambre de combustion d'amont (18) individuelle avant d'être amené à une turbine à gaz (28),
caractérisé en ce que l'air chaud qui vient d'être chauffé est porté à haute température indirectement dans une chambre de combustion d'amont (18) à combustibles solides et à évacuation de cendres liquides et que les gaz de fumée de la chambre de combustion d'amont (18) sont exploités énergétiquement, seuls ou en commun avec l'air sortant de la turbine à gaz (28), au cours du processus combiné ou de processus individuels.

2. Procédé selon la revendication 1,
caractérisé en ce que l'air de combustion des brûleurs (21) de la chaudière et de la chambre de combustion d'amont (18) à exploitation atmosphérique est chauffé par un réchauffeur d'air (15) commun chauffé par les gaz sortant de la chaudière (1).

3. Procédé selon la revendication 1,
caractérisé en ce que l'air de combustion des brûleurs (21) de la chambre de combustion d'amont (18) sous pression est dérivé de l'air chaud chauffé.

4. Procédé selon la revendication 1,
caractérisé en ce que le combustible destiné à la chambre de combustion d'amont (18) est dérivé, sous forme de courant partiel, du système de traitement de combustible conventionnel (3) de la chaudière (1).

5. Procédé selon la revendication 1,
caractérisé en ce que le combustible de la chambre de combustion d'amont (18) est produit dans une installation de traitement de combustible individuelle.

6. Procédé selon la revendication 1,
caractérisé en ce que le combustible provient d'une chaudière (1) en service de la centrale.

7. Procédé de la revendication 1,
caractérisé en ce que les gaz de fumée de la chambure de combustion d'amont (18) alimentent la chaudière (1).

8. Procédé selon la revendication 1,
caractérisé en ce que les gaz de fumée de la chambre de combustion d'amont (18) sont utilisés pour l'installation de traitement de combustible (3) de la chaudière (1).

9. Procédé selon la revendication 1,
caractérisé en ce que les gaz de fumée sont mélangés à l'air sortant de la turbine à gaz (28).

10. Procédé selon la revendication 1,
caractérisé en ce que l'air sortant de la turbine à gaz (28) est utilisé comme air de combustion de la chaudière (1) et/ou de la chambre de combustion d'amont (18).

11. Procédé selon la revendication 1,
caractérisé en ce que l'air sortant de la turbine à gaz (28) alimente la chaudière (1).

12. Procédé selon la revendication 1,
caractérisé en ce que l'air sortant de la turbine à gaz (28) est utilisé pour l'installation de traitement de combustible de la chaudière (1).

13. Procédé selon les revendications 1 et 7 à 12,
caractérisé en ce qu'on produit un mélange de gaz de fumée et d'air sortant.

14. Procédé selon la revendication 1,
caractérisé en ce que le gaz de fumée de la chambre de combustion d'amont (18) et/ou l'air sortant de la turbine à gaz (28) sont utilisés pour une installation de traitement de combustible individuelle.

15. Procédé selon la revendication 1,
caractérisé en ce que le gaz de fumée de la chambre de combustion d'amont (18) et/ou l'air sortant de la turbine à gaz (28) sont utilisés pour une installation individuelle de récupération de la chaleur perdue.

16. Procédé selon les revendications 1 et 7 à 15,
caractérisé en ce que le gaz de fumée et/ou l'air sortant de la turbine à gaz (28) sont mélangés d'air froid.

17. Procédé pour l'exploitation d'une centrale combinée comprenant une chaudière à foyer sous pression (1) et à combustion de combustibles solides, surtout de lignite, le gaz de fumée de la chaudière (1) étant nettoyé et porté à haute température par une chambre de combustion d'amont (18) avant d'alimenter une turbine à gaz (28),
caractérisé en ce que le gaz de fumée nettoyé de la chaudière (1) est porté à haute température indirectement dans une chambre de combustion d'amont (18) individuelle à combustibles solides et évacuation de cendres liquides, et que les gaz de fumée de la chambre de combustion d'amont (18) sont exploités énergétiquement, seuls ou en combinaison avec le gaz sortant de la turbine à gaz (28), au cours du processus combiné ou d'un processus individuel.

18. Procédé selon la revendication 17,
caractérisé en ce que les gaz de fumée de la chambre de combustion d'amont (18) sont amenés à une chaudière à chaleur perdue et/ou à la chaudière (1) et/ou à l'installation de traitement de combustible de la chaudière (1) et/ou à une installation individuelle.

19. Procédé selon la revendication 17,
caractérisé en ce que l'air de combustion de la chambre de combustion d'amont (18) est dérivé, sous forme de courant partiel, de l'air de combustion destiné à la chaudière (1).

20. Procédé selon la revendication 17,
caractérisé en ce que le combustible de la chambre de combustion d'amont (18) provient du dispositif d'alimentation en combustible (3) de la chaudière (1).

21. Procédé selon la revendication 17,
caractérisé en ce que le gaz de fumée de la chambre de combustion d'amont (18) rentre dans la chaudière (1).

22. Installation pour l'exploitation d'une centrale combinée à combustion de combustibles solides, surtout de lignite, comprenant entre la chaudière (1) équipée d'un échangeur de chaleur (7; 8) et la turbine à gaz (28) une chambre de combustion d'amont (18) individuelle avec étage de réchauffe de l'air (19) dont la face d'entrée (26) est reliée à la chaudière (1) et dont la face de sortie (27) est reliée à la turbine à gaz (28),
caractérisée en ce qu'elle comporte une chambre de combustion d'amont (18) à combustibles solides et à évacuation de cendres liquides et que la sortie de gaz de fumée (25) de la chambre de combustion d'amont (18) est reliée, seule ou en commun avec la sortie de l'air sortant (29) de la turbine à gaz (28), à la chaudière (1) et/ou à une installation de traitement de combustible (3) et/ou à une installation de récupération de chaleur.

23. Installation selon la revendication 22,
caractérisée en ce que la chaudière (1) est conçue comme chaudière combinée à vapeur, à air chaud et à chaleur perdue.

24. Installation selon la revendication 22,
caractérisée en ce que la conduite d'air de combustion (22) des brûleurs atmosphériques (21) de la chambre de combustion d'amont (18) fait partie intégrante de la conduite d'air de combustion (6) de la chaudière (1).

25. Installation selon la revendication 22,
caractérisée en ce que la conduite d'air de combustion (22) de la chambre de combustion d'amont (18) sous pression fait partie intégrante de la conduite d'air chaud (26).

26. Installation selon la revendication 22,
caractérisée en ce que la conduite de combustible (20) de la chambre de combustion d'amont (18) fait partie intégrante de l'installation de traitement de combustible (3) de la chaudière (1).
